Europäisches Patentamt

European Patent Office

Office européen des brevets

(11) Veröffentlichungsnummer: **0 496 909 A1**

# EUROPÄISCHE PATENTANMELDUNG

(21) Anmeldenummer: **91101143.5**

(22) Anmeldetag: **29.01.91**

(51) Int. Cl.5: **B23K 9/133**

(43) Veröffentlichungstag der Anmeldung:
**05.08.92 Patentblatt 92/32**

(84) Benannte Vertragsstaaten:
**AT BE DE ES FR GB IT SE**

(71) Anmelder: **INSTITUT PO ROBOTISIRANI SYSTEMI**
**A. Bonchev ul., Block 2**
**Sofia 1113(BG)**

(72) Erfinder: **Samokovlisski, David Albert, Dipl.-Ing.**
**G. Kirkov ul. 13**
**Sofia(BG)**
Erfinder: **Nemetchek, Alfred Emmerich, Dipl.-Ing.**
**6-ti Septemvri ul. 56**
**Sofia(BG)**
Erfinder: **Andreev, Krassimir Andreev, Dipl.-Ing.**
**Komplex Mladost 1, Block 3, Eingang 6**
**Sofia(BG)**
Erfinder: **Tepelikyan, Berch Eria, Dipl.-Ing.**
**Komplex Nadejda, Block 250, Eingang 4**
**Sofia(BG)**
Erfinder: **Mihaylov, Emil Dimitrov, Dipl.-Ing.**
**Smerch ul. 18**
**Sofia(BG)**

(74) Vertreter: **Finck, Dieter et al**
**Patentanwälte v. Füner, Ebbinghaus, Finck**
**Mariahilfplatz 2 & 3**
**W-8000 München 90(DE)**

(54) **Planetenvorrichtung für die Zuführung von Elektrodendraht.**

(57) Die Planetenvorrichtung für die Zuführung von Elektrodendraht (2), insbesondere für Schutzgasschweißen, hat ein Gehäuse (1), in welchem senkrecht zur Bewegungsrichtung des Elektrodendrahts (2) eine Führungsöffnung (3) ausgebildet ist, in der zwei Paare von jeweils diametral gegenüberliegenden schraubenförmigen Führungskanälen (4, 5, 6, 7) mit einem vorgewählten Anfangswinkel ($\alpha$) bezogen auf die Bewegungsrichtung des Elektrodendrahts (2) ausgebildet sind. In der Führungsöffnung (3) sind zwei Drahtzuführrollen (10, 11) so angeordnet, daß ihre Achsen (12, 13) in dem einen Paar von Führungskanälen (4, 6) bzw. (5, 7) verschiebbar gelagert sind, während die Drahtzuführrollen (10, 14) selbst in dem Paar von Kanälen (5, 7) bzw. (4, 6) aufgenommen sind, in denen sich ihre zugehörige Achse (12, 13) nicht befindet. Der Steigungswinkel ($\beta$) der schraubenförmigen Führungskanäle (4, 5, 6, 7) beträgt 75° bis 78°. Bei dieser Vorrichtung ist unabhängig vom Elektrodendrahtdurchmesser die Kontaktlinie zwischen den Drahtzuführrollen (10, 11) und dem Elektrodendraht (2) annähernd gleich, wodurch der Elektrodendraht (2) unabhängig von seinem Durchmesser beschädigungsfrei mit maximaler Vorschubkraft transportiert werden kann.

Die Erfindung betrifft eine Planetenvorrichtung für die Zuführung von Elektrodendraht, insbesondere für Schutzgasschweißen, die ein Gehäuse aufweist, in welchem sich Drahtzuführrollen befinden, die sich frei um Achsen drehen, die unter einem Winkel zu dem zugeführten Elektrodendraht angeordnet sind. Die Achsen sind in tragenden Führungselementen angeordnet, die kinematisch mit Mittel zum Gegeneinanderdrücken der Drahtzuführrollen verbunden sind, welche aus zweiarmigen Hebeln bestehen, deren kurze Arme mit den Stirnseiten der tragenden Führungselemente in Kontakt stehen, während ihre langen Arme mit Aussparungen eines hohlen kegelförmigen Körpers in Kontakt stehen, der an einem Schaft des Gehäuses axial beweglich montiert ist. Im Hohlraum des kegelförmigen Körpers befindet sich ein elastisches Element, dessen eines Ende an dem Gehäuse und dessen anderes Ende an einer Mutter abgestützt ist, die mittels Gewinde mit dem führenden Teil des hohlen kegelförmigen Körpers verbunden ist. Im Gehäuse ist senkrecht zum Elektrodendraht eine Führungsöffnung ausgebildet, in welcher die tragenden Führungselement angeordnet sind, in denen die auf Achsen gelagerten Drahtzuführrollen vorgesehen sind.

Aus der BG-PS 44 499 ist bereits eine Vorrichtung zum Zuführen von Elektrodendraht bekannt, die ein Gehäuse aufweist, in welchem Drahtzuführrollen angeordnet sind, die sich planetar um Achsen drehen, welche unter einem festgelegten konstanten Winkel angeordnet sind und sich mit dem zugeführten Elektrodendraht kreuzen. Die Drahtzuführrollen sind Zylinder mit konkav-hyperbolen Mantellinien, d.h. sie haben ein Außenprofil, das der Form von hyperboloiden Zylindroiden entspricht. Der Eingriff dieses Profils mit der zylindrischen Oberfläche des Elektrodendrahts erfolgt entlang einer gekrümmten Linie, die sich vom einen Ende der Drahtzuführungsrollen bis zum anderen Ende erstreckt und die durch den Elektrodendraht selbst hindurchgeht.

Bei der bekannten Vorrichtung erfolgt der Kontakt des zylindrischen Elektrodendrahts mit der Oberfläche der Drahtzuführrollen in Form von hyperboloiden Zylindroiden mit einer maximalen Kontaktfläche für einen ganz bestimmten Durchmesser des Elektrodendrahts. Das heißt, daß hier die hyperboloide Zylindroidform nur mit einem ganz bestimmten zylindrischen Elektrodendraht optimal zusammenwirkt, so daß es nicht möglich ist, für unterschiedliche Elektrodendrahtdurchmesser von 0,6 bis 2,4 mm jeweils die maximal mögliche Vorschubkraft ohne Verformungen oder Beschädigungen des Elektrodendrahts zu erreichen, die besonders groß bei dünnen oder hohlen Elektroden aus Aluminium sind. Wegen der verkleinerten Kontaktzonen sind die Kontaktspannungen sehr hoch, wodurch der Elektrodendraht verdreht wird und häufig auch Späne vom Elektrodendraht abgetrennt werden.

Aus der BG-PS 33 923 ist eine weitere Planetenvorrichtung für die Zuführung von Elektrodendraht bekannt, die ein Gehäuse mit einem hohlen Gewindeschaft mit Schlitzen aufweist, in denen zwei zweiarmige Hebel verschwenkbar angeordnet sind, deren kurze Arme mit Stirnseiten von Kolben von tragenden Drahtzuführrollen in Kontakt stehen. Die Drahtzuführrollen sind einander gegenüberliegend und radial zur Achse des Elektrodendrahts in einer zylindrischen Öffnung des Gehäuses angeordnet. Die langen Arme der zweiarmigen Hebel stehen über Führungsrollen in Kontakt mit einem Führungskegel, der axial beweglich auf dem hohlen Gewindeschaft des Gehäuses angebracht ist. Auf der Innenseite des Hohlraums des Führungskegels stützt sich das eine Ende einer Schraubenfeder ab, deren anderes Ende an einer Einrichtung zum Einstellen der Vorspannkraft der Feder anliegt.

Diese bekannte Vorrichtung hat einen kompakten, vereinfachten Aufbau und kann mit Drahtzuführrollen arbeiten, deren Profil die Form von hyperboloidalen Zylindroiden hat. Es muß jedoch auf einen bestimmten Elektrodendrahtdurchmesser angepaßt werden. Eine automatische Anpassung an unterschiedliche Elektrodendrahtdurchmesser ist nicht möglich.

Die der Erfindung zugrunde liegende Aufgabe besteht deshalb darin, die Planetenvorrichtung für die Zuführung von Elektrodendraht der eingangs genannten Art so auszubilden, daß sie für alle Elektrodendrahtdurchmesser bei einem vorgewählten Hyperboloidprofil der Drahtzuführrollen in Betrieb eine maximal lange Kontaktlinie ermöglicht.

Diese Aufgabe wird ausgehend von der Planetenvorrichtung der eingangs genannten Art dadurch gelöst, daß in der Führungsöffnung schraubenförmige Führungskanäle ausgebildet sind, die mit dem Elektrodendraht einen Winkel bilden. Dabei bilden die oberen Hälften von zwei gegenüberliegenden Führungskanälen Führungen für die Achse der oberen Drahtzuführrolle, während in den unteren Hälften dieser Führungskanäle längsbeweglich die diametral angeordneten Teile der unteren Drahtzuführrolle des unteren tragenden Führungselements aufgenommen sind. In den oberen Hälften der anderen gegenüberliegenden Führungskanäle sind längsbeweglich die diametral angeordneten Teile der oberen Drahtzuführrolle aufgenommen, während die unteren Hälften dieser Führungskanäle Führungen für die Achse der unteren Drahtzuführungsrolle sind.

Die schraubenförmigen Führungskanäle haben vorzugsweise eine Schraubenlinie mit einem Steigungswinkel von 75° bis 78°.

Aufgrund der lagemäßigen Zuordnung der Führungsöffnung, der tragenden Führungselemente und der Achsen der Drahtzuführrollen liegt die Achse der Führungsöffnung in der Schnittlinie der Ebenen, in denen die Achsen der Drahtzuführrollen liegen. Die Schnittlinie geht auch durch den Schnittpunkt der Kontaktlinien mit der Achse des Elektrodendrahts hindurch.

Die erfindungsgemäße Planetenvorrichtung für die Zuführung von Elektrodendraht hat einen einfachen Aufbau, ist leicht herzustellen und hat verglichen mit den bekannten Vorrichtungen ein geringes Gewicht und relativ kleine Außenabmessungen. Für die Aufhängung der tragenden Führungselemente sind keine Konsolen erforderlich. Der Kontakt des zylindrischen Elektrodendrahts mit dem hyperboloiden Zylindroidprofil der Drahtzuführrollen ist für alle Elektrodendrahtdurchmesser optimal. Auf diese Weise werden über dem gesamten Bereich von Elektrodendrahtdurchmessern maximale Vorschubkräfte erreicht, ohne daß die Gefahr einer Verwindung des Drahtes oder des Abtrennens von Spänen besteht.

Anhand von Zeichnungen wird ein Ausführungsbeispiel der Erfindung näher erläutert. Es zeigt:

    Fig. 1    die Planetenvorrichtung für die Zuführung von Elektrodendraht im Axialschnitt,

    Fig. 2    die Ansicht in Richtung des Pfeils D von Fig. 1,

    Fig. 3    schematisch einen Längsschnitt durch das Gehäuse mit den Drahtzuführrollen,

    Fig. 4    eine Ansicht in Richtung des Pfeils E von Fig. 3,

    Fig. 5    den Schnitt K-K von Fig. 3,

    Fig. 6    schematisch die Anordnung der Drahtzuführrollen ohne Elektrodendraht,

    Fig. 7    axonometrisch die Drahtzuführrollen im Zusammenwirken mit einem Elektrodendraht von kleinem Durchmesser und

    Fig. 8    axonometrisch die Drahtzuführrollen im Zusammenwirken mit einem Elektrodendraht mit großem Durchmesser.

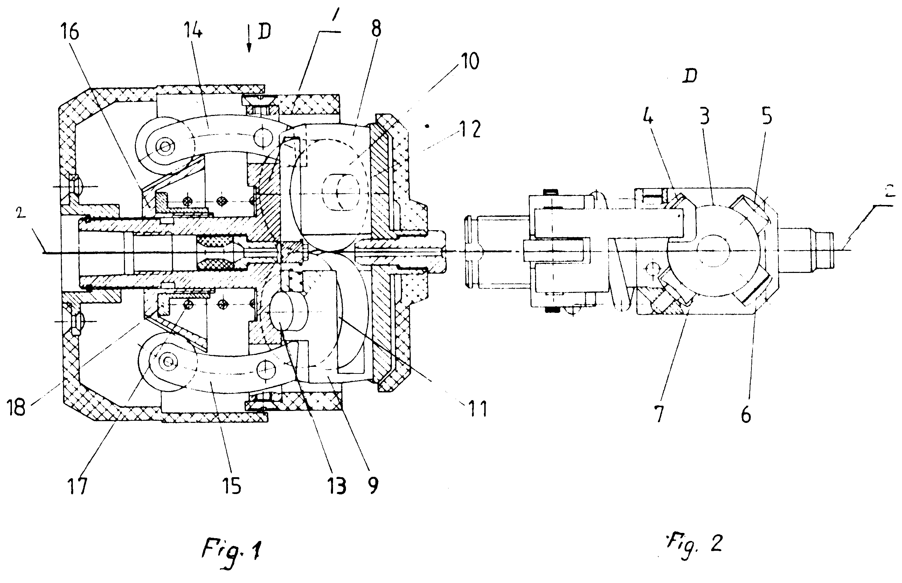

Die in Fig. 1 und 2 gezeigte Planetenvorrichtung für die Zuführung von Elektrodendraht 2 hat ein Gehäuse 1 mit einem prismatischen Teil und einem Schaft. In dem prismatischen Teil des Gehäuses 1 ist senkrecht zur Bewegungsrichtung des Elektrodendrahtes 2 eine Führungsöffnung 3 ausgebildet, die vier Führungskanäle 4, 5, 6, 7 aufweist, welche unter einem vorgewählten Anfangswinkel $\alpha_0$ zum Elektrodendraht 2 angeordnet sind. In der Führungsöffnung 3 sind tragende Führungselemente 8 und 9 angeordnet, in welchen Drahtzuführrollen 10 und 11 montiert sind, die sich frei um Achsen 12 und 13 drehen. Die oberen Hälften eines Paares gegenüberliegender Führungskanäle 4 und 6 bilden Führungen für die Achse 12 der Drahtzuführrolle 10, während die unteren Hälften der Führungskanäle 4 und 6 die längsbeweglichen diametral angeordneten Teile der Drahtzuführrolle 11 aufnehmen. In der oberen Hälfte des anderen Paars der beiden gegenüberliegenden Führungskanäle 5 und 7 sind die längsbeweglichen diametral angeordneten Teile der Drahtzuführrolle 10 aufgenommen, während die unteren Hälften dieser Führungskanäle 6 und 7 Führungen für die Achse 13 der Drahtzuführrolle 11 bilden.

Die tragenden Führungselemente 8 und 9 sind kinematisch mit zweiarmigen Hebeln 14 und 15 verbunden, die jeweils einen kurzen Arm und einen langen Arm haben. Die kurzen Arme der Hebel 14 und 15 stehen in Kontakt mit den Stirnflächen der tragenden Führungselemente 8 und 9. Die langen Arme der Hebel 14 und 15 stehen in Kontakt mit einem hohlen kegelförmigen Körper 16, der axial beweglich am Schaft des Gehäuses 1 angeordnet ist. Im Hohlraum des kegelförmigen Körpers 16 befindet sich ein Federelement 17, dessen eines Ende im Gehäuse 1 abgestüzt ist und dessen anderes Ende an einer Mutter 18 angreift, die in ein führendes Teil des hohlen kegelförmigen Körpers 16 eingeschraubt ist.

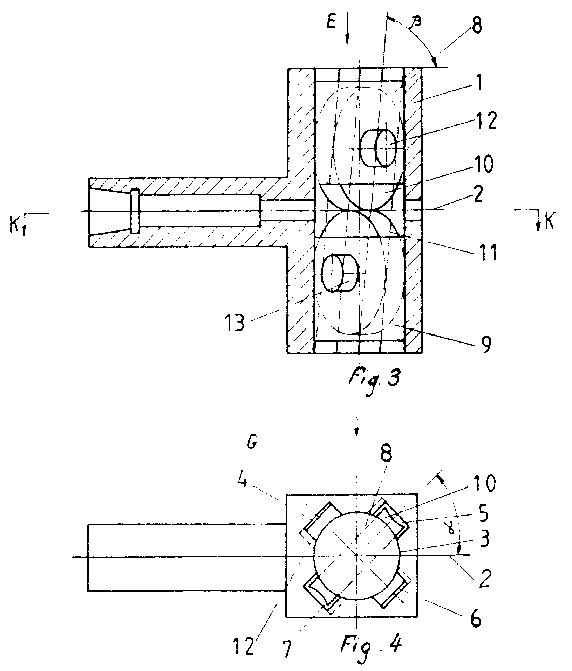

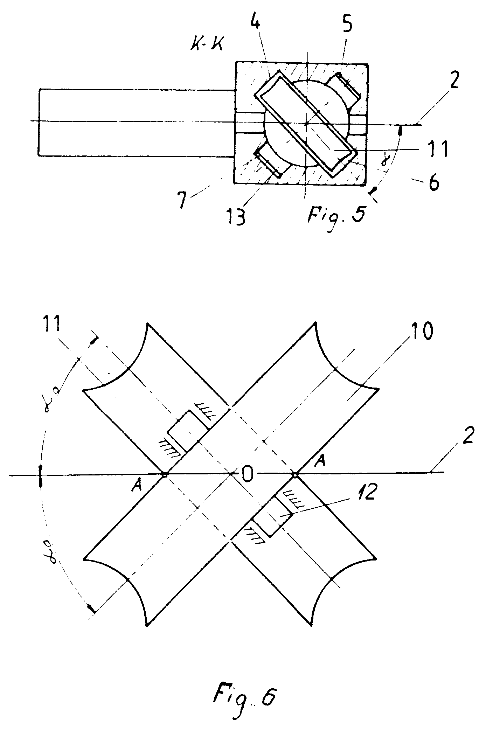

Die Führungskanäle 4, 5, 6 und 7, die insbesondere in Fig. 3 und 4 zu sehen sind, sind schraubenförmig ausgebildet, wobei ihre Schraubenlinie einen Steigungswinkel $\beta$ hat.

Wenn die Planetenvorrichtung arbeitet und sich dreht, ohne daß ein Elektrodendraht 2 eingeführt ist, ergibt sich ein Kontakt zwischen den Drahtzuführrollen 10 und 11 längs einer geraden Kontaktlinie A-A, wobei, wie aus Fig. 6 zu ersehen ist, die Drahtzuführrollen 10 und 11 unter einem vorgewählten Anfangswinkel $\alpha_0$ zur Achse des Elektrodendrahts 2 angeordnet sind.

Bei Einführung eines Elektrodendrahts 2 entfernen sich die tragenden Führungselemente 8 und 9 mit ihren Zuführrollen 10 und 11 voneinander, wobei sie sich gleichzeitig entgegengesetzt um einen Winkel $\Delta\alpha = \alpha_1 - \alpha_0$ drehen. Dies erfolgt durch die Führung der Achsen 12 und 13 der Drahtzuführrollen 10 und 11 in den schraubenförmigen Führungskanälen 4, 5, 6 und 7. Dadurch ergeben sich eine räumliche Kontaktlinie B-B mit maximaler Länge für die Drahtzuführrolle 10 und eine räumliche Kontaktlinie B'-B' mit maximaler Länge für die Drahtzuführrolle 11 bezogen auf den zylindrischen Elektrodendraht 2, wobei die Punkte B und B' auf den Mantellinien des zylindrischen Elektrodendrahts 2 liegen.

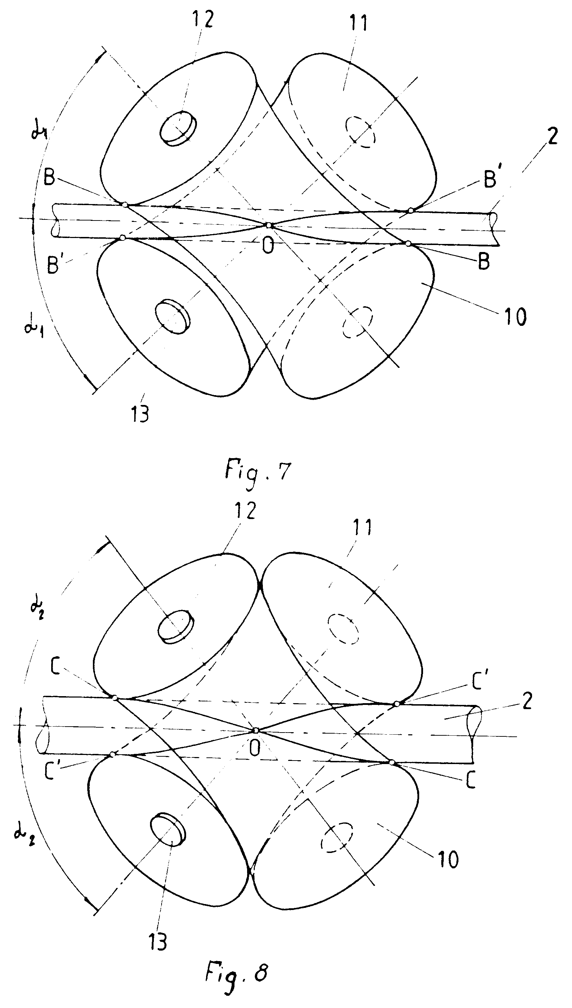

Bei Einführung eines Elektrodendrahtes 2 mit größerem Durchmesser verschwenken sich die tragenden Führungselemente 8 und 9 um einen Winkel $\Delta\alpha' = \alpha_2 - \alpha_1$, wobei sie sich noch weiter voneinander entfernen. Dadurch ergeben sich, wie aus Fig. 8 zu ersehen ist, eine neue räumliche Kontaktlinie C-C mit maximaler Länge für die Drahtzuführrolle 10 und eine neue räumliche Kontaktlinie C'-C' für die Drahtzuführrolle 11, wobei die Punkte C und C' wieder auf den Mantellinien des Elektrodendrahtes 2 mit größerem Durchmesser liegen.

Für die am häufigsten eingesetzten Elektrodendrahtdurchmesser von 0,6 bis 0,4 mm liegt der Anfangswinkel $\alpha_0$ in den Grenzen von 30° bis 60°, während der größte Abweichungswinkel $\Delta\alpha$ in den Grenzen bis 4° liegt. Der Steigungswinkel $\beta$ der schraubenförmigen Führungskanäle 4, 5, 6, 7 ist direkt proportional zum maximalen Durchmesser des ausgewählten Elektrodendrahts 2 und umgekehrt proportional zur Länge der Kontaktlinie A-A und zum maximalen Winkel $\alpha$. Die günstigsten Werte für den Steigungswinkel $\beta$ liegen zwischen 75 und 78°. Die Abhängigkeit zwischen den Winkeln $\Delta\alpha$ und $\beta$ ergibt sich aus der nachstehenden Gleichung, wenn b der Durchmesser des Elektrodendrahts 2 und $\overline{AA}$ die Länge der Kontaktlinie gemäß Figur 6 ist.

$$tg\ \beta = d_{max} / 0{,}017\ \overline{AA}\ \Delta\ \alpha$$

**Patentansprüche**

1. Planetenvorrichtung für die Zuführung von zylindrischem Elektrodendraht (2), insbesondere für Schutzgasschweißen,
   - mit einem Gehäuse (1), durch das der Elektrodendraht (2) geführt ist,
   - mit einer im Gehäuse (1) senkrecht zur Bewegungsrichtung des Elektrodendrahts (2) angeordneten Führungsöffnung (3) und
   - mit Drahtzuführrollen (10, 11), die um ihre in einem Winkel zum Elektrodendraht (2) angeordneten Achsen (12, 13) frei drehbar in der Führungsöffnung angeordnet und gegen den Elektrodendraht (2) angedrückt sind,
   dadurch **gekennzeichnet,**
   - daß in der Führungsöffnung (3) schraubenförmige Führungskanäle (4, 5, 6, 7) ausgebildet sind, die mit der Bewegungsrichtung des Elektrodendrahts (2) einen Winkel ($\alpha$) bilden,
   - daß die einen Hälften des einen Paars gegenüberliegender Führungskanäle (4, 6) Führungen für die Achse (12) der einen Drahtzuführrolle (10) sind, während in ihren anderen Hälften die diametralen längsbeweglichen Teile der anderen Drahtzuführrolle (11) aufgenommen sind, und

   - daß in den einen Hälften des anderen Paars gegenüberliegender Führungskanäle (5, 7) die diametralen längsbeweglichen Teile der einen Drahtzuführrolle (10) aufgenommen sind, während ihre anderen Hälften Führungen für die Achse (13) der anderen Drahtzuführrolle (11) sind.

2. Planetenvorrichtung nach Anspruch 1, dadurch **gekennzeichnet**, daß die Schraubenlinie der Führungskanäle (4, 5, 6, 7) einen Steigungswinkel ($\beta$) von 77° bis 78° aufweisen.

3. Planetenvorrichtung nach Anspruch 1 oder 2, **gekennzeichnet**
   - durch in der Führungsöffnung (3) angeordnete Führungselemente (8, 9), in denen die Drahtzuführrollen (10, 11) frei drehbar sitzen,
   - durch kinematisch mit den Führungselementen (8, 9) verbundene zweiarmige Hebel (14, 15), die jeweils einen kurzen und einen langen Arm haben,
   - wobei die kurzen Arme der Hebel (14, 15) in Kontakt mit den Stirnseiten der Führungselemente (8, 9) stehen,
   - durch einen an einem Schaft des Gehäuses (1) axial beweglich angebrachten, einen Hohlraum aufweisenden kegelförmigen Körper (16), mit dem die langen Arme der Hebel (14, 15) in Kontakt stehen,
   - durch ein im Hohlraum des kegelförmigen Körpers (16) angeordnetes Federelement (17), dessen eines Ende am Gehäuse (1) anliegt und
   - durch eine in einem führenden Teil des einen Hohlraum aufweisenden kegelförmigen Körpers (16) eingeschraubten Mutter (18), an der das andere Ende des Federelements (17) anliegt.

Fig. 1

Fig. 2

Fig. 3

Fig. 4

Fig. 5

Fig. 6

Fig. 7

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 064 835 (DSO)<br>* das ganze Dokument *<br>--- | 1-3 | B23K9/133 |
| A,D | BG-A-33 923 (D. A. SZAMOKOWLIJSKI) 15. Juni 1983<br>* das ganze Dokument *<br>--- | 1-3 | |
| A | SOVIET INVENTIONS ILLUSTRATED,<br>Section M23, week 8646, 27 november 1986.<br>Derwent PublicationsLtd., London GB<br>*No 86-303402/46*<br><br>----- | 1-3 | |
| | | | **RECHERCHIERTE SACHGEBIETE (Int. Cl.5 )**<br><br>B23K |

Der vorliegende Recherchenbericht wurde für alle Patentansprüche erstellt

| Recherchenort | Abschlußdatum der Recherche | Prüfer |
|---|---|---|
| DEN HAAG | 23 OKTOBER 1991 | ARAN D.D. |